# EUROPEAN PATENT SPECIFICATION

(11) **EP 2 341 263 B1**
(45) Date of publication and mention of the grant of the patent: **21.11.2012**
(21) Application number: 11163115.6
(22) Date of filing: 22.08.2007
(51) Int. Cl.: F16G 5/16

(54) **Assembling device and assembling method for a power transmission belt**
Montagevorrichtung und Montageverfahren für einen Antriebsriemen
Dispositif d'assemblage et procédé d'assemblage pour une courroie de transmission

(30) Priority: 28.08.2006 JP 2006231272
(43) Date of publication of application: 06.07.2011
(62) Divisional of application: 07806175.1
(73) Proprietor: Toyota Jidosha Kabushiki Kaisha, Toyota-shi, Aichi 471-8571 (JP)
(72) Inventor: Kobayashi, Daisuke, Toyota-shi Aichi 471-8571 (JP)
(74) Representative: TBK

(56) References cited:
- JP-A- 2002 276 740
- JP-A- 2004 066 434
- US-A1- 2002 088 115

## Description

This invention relates to an assembling device and an assembling method.

In the prior art, a geared transmission capable of changing a gear stage thereof stepwise, and a continuously variable transmission capable of varying a speed change ratio steplessly are available as a transmission mechanism for transmitting power between rotary members. For example, a belt-type continuously variable transmission and a toroidal-type continuously variable transmission are known as the continuously variable transmission. Specifically, the belt-type continuously variable transmission is a transmission varying a speed change ratio continuously using a pair of drive pulleys and a pair of driven pulleys, and a driving belt applied to those pulleys. The known endless driving belt used in such belt-type continuously variable transmission is prepared by arranging a plurality of plate members called an "element" or a "block" in a circular manner while connecting the plate members with one another, and fastening the interlinked plate members by an annular belt called a "band" or a "carrier".

When the driving belt of this kind applied to the drive and driven pulleys is driven by driving the drive pulley, a frictional force acts on a contact portion between the element and the drive pulley, and a compressive force is applied to the elements in the arranging direction thereof, i.e., in the thickness direction thereof according to a torque of the drive pulley. The compressive force applied to the element being contacted with the drive pulley is transmitted to the element being contacted with the driven pulley via the elements existing between the drive and driven pulleys. When the compressive force is transmitted to the element being contacted with the driven pulley, a frictional force is generated at the contact portion between the element and the driven pulley and a torque to rotate the driven pulley is established according to the transmitted compressive force. The power is thus transmitted between the drive and driven pulley through the driving belt.

One example of above-explained driving belt is disclosed in JP-A-2000-249195. The "High-Loaded Transmission Belt" taught by JP-A- 2000-249195 is composed of a center belt and blocks reinforced against lateral pressure, and it is applied to a main prime mover and an auxiliary prime mover of automobiles and agricultural machineries. Specifically, the "High-Loaded Transmission Belt" comprises a block (i.e., an element) which is so constituted that two belt sides having lock parts in its top end are connected to each other in their bottom ends by a connecting member, and two rows of endless carriers (i.e., rings) fixedly fitted into an engagement groove opening between the lock parts. The belt side portion of the element is provided individually with a convex portion and a concave portion on each face so that the elements can interlink with one another. Therefore, the interlinked elements can be aligned even when the belt is running.

In addition to above, JP-A-2001-193796 discloses an invention relating to "Element for Metal Belt and Metal Belt" for continuously variable transmissions of vehicles. The metal belt taught by JP-A-2001-193796 comprises: a metal endless band (i.e., a ring) applied to annular grooves of a drive and a driven pulleys; a plurality of metal element composed of a body portion to be contacted with the annular groove of the pulley, a pair of pillars erected on the body portion and faced with each other, an engagement protruded portion formed on a leading end of the pillar, and an opening for inserting the band (i.e., a recessed portion) formed between the engagement protruded portions; and an endless metal falling preventing body somewhat wider than the band. The falling preventing body can be bent to narrow its width when it is inserted in between the engagement protruded portions to prevent falling of the band.

On the other hand, JP-A-2000-205345 discloses a "Method and Device for Assembling CVT Belt". In the assembling method taught by JP-A-2000-205345, a plurality of platelike elements comprising a pair of grooves on both lateral sides are accumulated in the thickness direction thereof to form an annular element assembly, and two rings are inserted into grooves of the element assembly held by a linear dummy ring member being arranged annularly

According to the transmission belt taught by JP-A-2000-249195, the lock parts are formed on both belt sides of the element erected beside the carriers to hold the carriers on the element, and the convex portion and the concave portion are formed individually on an upper corner of each face of the belt sides to interlink adjoining elements. That is, the convex portion and concave portion functioning as male and female connections are formed symmetrically on both upper corner of the element. The carriers are individually fitted into each engagement groove and held by the lock part so that two rows of the belts are held in the element.

According to the transmission belt of JP-A-2000-249195 thus structured, the carriers arranged parallel to each other have to be overlapped partially when fitted onto the elements or dismounted from the elements. That is, a total width of the carriers arranged parallel to each other have to be reduced narrower than the opening width between the lock parts of the element when the carriers are fitted onto the elements or dismounted from the elements, by twisting the carriers to overlap partially.

In order to twist the carriers being arranged parallel to each other thereby overlapping those carriers partially, it is necessary to swing the interlinked elements, that is, to pivot the elements relatively with each other. However, according to the transmission belt taught by JP-A-2000-249195, the convex portion and the concave portion for interlinking adjoining elements are formed on both upper corners of the element. Accordingly, lateral movement of the element has to be restricted. This makes difficult to overlap the carriers arranged parallel to each other when assembling the transmission belt.

In order to solve the above-mentioned problem, the applicant has filed an application relating to the driving belt, in which a male connection and a female connection for joining adjoining elements are individually formed on each face of the element being opposed to the adjoining element, at a center of width of the element. Therefore, each element can pivot relatively with the adjoining elements so that the two rows of rings aligned parallel to each other can be overlapped partially when fitted with the elements.

However, the two rows of the rings have to be fitted into the recess of large number of element, for example, about 400 pieces of the elements. This means that it will take long time for assembling a driving belt by fitting the ring into the recess of the element piece by piece by hand, or fitting the ring into the recess of every several pieces of the element by hand. In addition to above, in case of assembling the driving belt manually by hand, a length of time to assemble the driving belt may be varied depending on the person. Thus, productivity of the driving belt still has to be improved by fitting the ring into the recess of the elements in a systematic manner.

US 2002/088115 A1 discloses an assembling device of a driving belt having the features of the preamble of claim 1.

JP 2002 276740 A discloses an assembling method of a driving belt. This document does not disclose to hold a plurality of elements in the form of an element array in which the elements are juxtaposed to each other in its thickness direction and directed to open the recess thereof, and to move the element array accommodating the overlapped rings in its recess along the length direction of the rings to a portion where the first and the second rings are aligned parallel to each other.

It is the object of the invention to provide an assembling device and an assembling method of a driving belt capable of fitting the ring into the recess of the elements easily and efficiently to improve a productivity of the driving belt.

The object of the invention is achieved with an assembling device of a driving belt and an assembling method of a driving belt according to the independent claims.

Further advantageous developments of the invention are subject-matter of the dependent claims.

According to the invention the plurality of elements is held in the form of an element array, in which the elements are juxtaposed in its thickness direction and directed to open the recess thereof. Therefore, the two rows of rings can be fitted into the recess of the plurality of the elements simultaneously while fitting those rings in the inner circumferential side of both of the protruding portions. As a result, the driving belt can be assembled efficiently and the productivity of the driving belt is thereby improved.

The plurality of elements is held in the form of element array by the element holding member made of a flexible material and capable of winding into a circle or an arc in its length direction. Therefore, the two rows of rings can be fitted into the recess of the plurality of elements being held in the form of the element array simultaneously and easily.

In addition to the above-mentioned advantage, the element array is held properly by the side walls restricting a lateral movement of the elements and by the divider walls restricting a longitudinal movement of the elements. Therefore, the two rows of rings can be fitted into the recess of the plurality of elements simultaneously and easily.

According to the invention, the plurality of elements is held in the form of element array in which the elements are juxtaposed to each other in its thickness direction and directed to open the recess thereof. On the other hand, the first and the second rings are overlapped partially or entirely in its length direction, and the overlapped rings or the overlapped portion of the rings are inserted into the recess of the element array. Then, the first ring is fitted in the inner circumferential side of one of the protruding portions, and the second ring is fitted in the inner circumferential side of the other protruding portion by pushing second ring toward other protruding portion. Alternatively, the first and second rings are fitted in the inner circumferential side of both of the protruding portions by moving the element array accommodating the overlapped rings in its recess along the length direction of the rings to the portion where the first and the second rings are aligned parallel to each other. Thus, the two rows of rings can be fitted into the recess of the plurality of elements simultaneously so that the driving belt can be assembled efficiently. Consequently, the productivity of the driving belt is improved.

In addition to the above-mentioned advantage, the plurality of the elements is held in the form of element array by the member made of a flexible material capable of winding into a circle or an arc in its length direction thereby holding and releasing the element array. Therefore, the two rows of rings can be fitted into the recess of the plurality of elements simultaneously and easily.

As explained above, the plurality of elements is held in the form of element array in which the elements are juxtaposed in its thickness direction and directed to open the recess thereof. After the two rows of the rings are fitted into the recess of the most pieces of scheduled number of the element, the remaining portion of the rings are overlapped by a pivotal movement of the adjoining element array accommodating the rings in the recess thereof, and overlapped portion of the rings is fitted into the recess of subsequent element array. Then, the outer lateral side of the first ring overlapped inside of the second ring is fitted into the clearance between one of the protruding portions and a bottom of the recess, and the outer lateral side of the second ring overlapped outside of the first ring is fitted into the clearance between other protruding portion and the bottom of the recess by moving second ring toward other protruding portion. As a result, the partially overlapped two rows of rings are aligned parallel to each other in its entire length, that is, the outer lateral sides of both rings are fitted into the clearances between the protruding portions and the bottom of the recess in its entire length. Thus, even after the two rows of the rings are fitted into the recess of the most pieces of scheduled number of the elements by the predetermined method, the remaining portion of the rings can also be fitted into the recess of the plurality of elements simultaneously and easily. That is, the two rows of rings can be fitted into the recess of the elements efficiently in almost entire length thereof, and the productivity of the driving belt is thereby improved.

In addition to the above-mentioned advantage, after the two rows of the rings are fitted into the recess of the most pieces of scheduled number of the elements by the predetermined method, the elements to accommodate the remaining portion of the rings in its recess are held in the form of element array by the flexible member capable of winding into a circle or an arc in its length direction to hold and release the element array Therefore, the two rows of rings can be fitted into the recess of the elements efficiently in almost entire length thereof, and the productivity of the driving belt is thereby improved.
Fig. 1 is a sectional view schematically showing a configuration of the assembling device of the driving belt according to the first example of the invention.
Fig. 2 is a top view schematically showing a configuration of the assembling device of the driving belt according to the first example of the invention.
Fig. 3 is a sectional view schematically showing a cross-section of the base member of the assembling device of the driving belt according to the first example of the invention (A-A section of Fig. 2).
Fig. 4 is a top view schematically showing the assembling device of the driving belt according to the first example in which the base member is holding a plurality of elements.
Fig. 5 is a sectional view schematically showing the assembling device of the driving belt according to the first example in which the base member is holding a plurality of elements (A-A section of Fig. 4).
Fig. 6 is a top view schematically showing the assembling device of the driving belt according to the first example in which the base member is holding a plurality of elements and overlapped rings.
Fig. 7 is a sectional view schematically showing the assembling device of the driving belt according to the first example in which the base member is holding a plurality of elements and overlapped rings (A-A section of Fig. 6).
Fig. 8 is a sectional view schematically showing the assembling device of the driving belt according to the first example in which the base member is holding a plurality of elements and overlapped rings (B-B section of Fig. 6).
Fig. 9 is a side-sectional view schematically showing the assembling device of the driving belt according to the first example which is fitting the ring into the recess of the element.
Fig. 10 is a perspective view schematically showing the second example of the assembling device of the driving belt according to the invention.
Fig. 11 is a perspective view schematically showing the assembling device of the driving belt according to the second example which is holding a plurality of elements.
Fig. 12 is a side view schematically showing the assembling device of the second example.
Fig. 13 is a side view schematically showing the assembling device of the second example bent in its length direction.
Fig. 14 is a side view schematically showing a modified example of the assembling device of the driving belt according to the second example.
Fig. 15 is a view schematically showing the two rows of rings constituting the driving belt of the invention.
Fig. 16 is a front view schematically showing the driving belt to which the invention is applied.
Fig. 17 is a side-sectional view partially showing an example of the driving belt to which the invention is applied.
Fig. 18 is an explanatory drawing showing a pivotal movement of the elements of the driving belt to which the invention is applied.
Fig. 19 is a view schematically showing an overlapped portion of the rings and a remaining portion of the rings aligned parallel to each other.
Fig. 20 is a view schematically showing the rings overlapped by buckling one of the rings partially.
Fig. 21 is a side view schematically showing the rings overlapped by buckling one of the rings partially shown in Fig. 20.

### BEST MODE FOR CARRYING OUT THE INVENTION

Next, this invention will be explained with reference to the accompanying drawings. A configuration of the driving belt to which the invention is applied will be explained first of all, and then, examples of the assembling device, assembling methods, and manufacturing methods of the driving belt are to be explained sequentially.

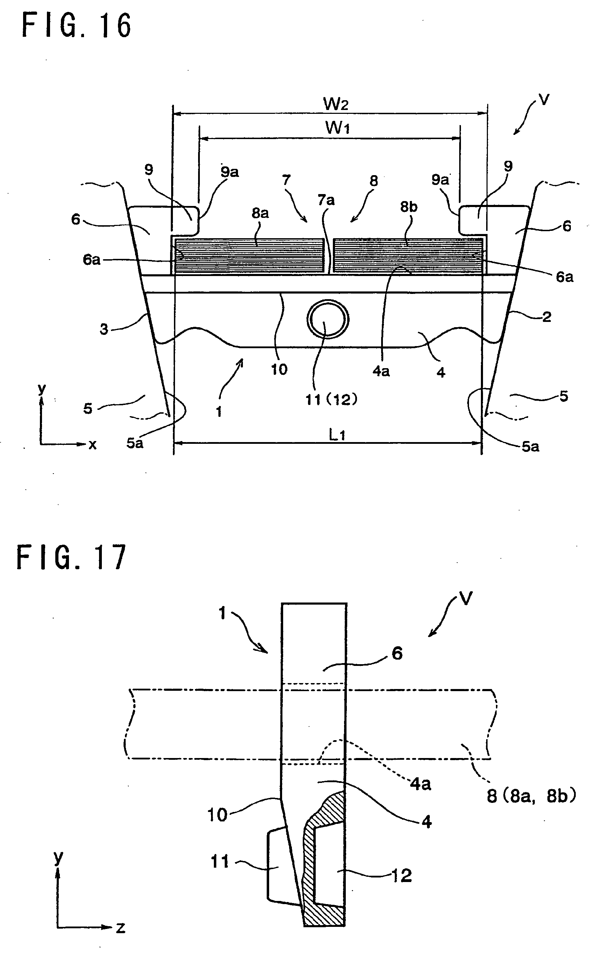

First of all, a configuration of the driving belt to which the invention is applied will be explained with reference to Figs. 16 and 17. Fig. 16 shows an example of a driving belt V to be applied to a drive pulley (i.e., an input shaft side pulley) and a driven pulley (i.e., an output shaft side pulley) of a belt type continuously variable transmission so as to transmit a power between those pulleys. An element 1 is a metal plate member comprising a base portion (or main body) 4. Both lateral faces 2 and 3 of the base portion 4, that is, both lateral ends (in the direction of x-axis in Fig. 16) of the base portion 4 are inclined. The inclined lateral faces 2 and 3 are frictionally contacted with a V-shaped groove 5a of a drive or driven pulley 5 of the belt type continuously variable transmission to transmit a torque.

The base portion 4 comprises columns 6 erected vertically (in the direction of y-axis in Figs. 16 and 17) at both lateral ends (in the direction of x-axis in Fig. 16) thereof. Accordingly, a recess 7 is formed by an upper face (or a top edge) 4a of the base portion 4 and both inner walls 6a of the columns 6 facing to the center of the base portion 4. Thus, the recess 7 opens upwardly in other words, the recess 7 opens toward an outer circumference of the driving belt V.

Specifically, the recess 7 is a space for accommodating an endless ring 8 for fastening the elements 1 interlinked closely with one another in a circular manner That is, the upper face 4a functions as a saddle face 4a onto which an inner circumferential face of the ring 8 is fitted.

The ring 8 is a layered ring made of metal comprising a plurality of annular belt-like layers overlapped in a circumferential direction. According to the first example, two rings 8a and 8b are arranged parallel to each other in the recess 7. Here, a configuration, dimensions, material, strength and so on of the rings 8a and 8b are identical to each other.

The element 1 comprises protruding portions 9. Each protruding portion 9 is formed integrally with the column 6 and protrudes toward a width center of the base portion 4 from an outer circumferential side of the columns 6, that is, both end faces 9a of the protruding portions 9 are faced inwardly to be opposed to each other. In other words, the protruding portion 9 is formed on both opening ends of the recess 7 above lateral ends of the ring 8a and 8b, i.e., on the end portions of the inner walls 6a, and both of the protruding portions 9 protrude toward a width center of the recess 7 (i.e., in the direction of x-axis in Fig. 16). That is, a clearance between the end faces 9a is an opening width W1 of the recess 7. On the other hand, a width of the recess 7 at bottom portion 7a (i.e., the upper face 4a) side, specifically, a clearance between the inner walls 6a is wider than the opening width W1, and which is represented by W2.

The elements 1 are interlinked with one another in a circular manner and fastened by the ring 8. The elements 1 thus fastened by the ring 8 is applied to the drive and driven pulleys 5. In case the driving belt V is applied to the pulleys 5, clearances between the elements 1 are narrowed gradually toward a rotational center of the pulleys 5 in a region where the elements 1 are contacted with the pulleys 5, and the elements 1 are eventually contacted with one another at its portion close to the rotational center of the pulley 5. For this reason, a thickness of the element 1 has to be thinned at its lower portion, that is, at the portion close to the rotational center of the pulley 5, as illustrated in Figs. 16 and 17.

According to the example shown in Fig. 17, one of the faces of the base portion 4 i.e., the left face in Fig. 17 is thinned gradually from a predetermined portion below the saddle face 4a. In case the belt V is being applied to the pulleys 5, the elements 1 are contacted with the adjoining element 1 at the portion where the thickness thereof starts to be reduced, in the region where the elements 1 are contacted with the pulley 5, in other words, in a curving region of the belt V That is, an edge of a boundary of thickness functions as a rocking edge 10.

A male connection 11 and a female connection 12 are respectively formed on each face of the base portion 4 being opposed to the adjoining element 1, at the center of width of the element 1. Specifically, as shown in Fig. 17, the male connection 11 of circular truncated cone is formed on one of the faces of the base portion 4 where the rocking edge 10 is formed. On the other hand, the bottomed cylindrical female connection 12 to which the adjoining male connection 11 is inserted loosely is formed on a face opposite to the face on which the male connection 11 is formed. Therefore, the elements 1 can be kept in line within a straight region of the belt V where the element 1 is not being contacted with the pulley 5.

That is, a relative position of the elements 1 within the straight region of the driving belt V can be determined in both vertical and horizontal directions in Fig. 16 by joining the male and female connections 11 and 12. For this reason, chattering of the driving belt V is prevented so that the belt V can be driven smoothly when the belt-type continuously variable transmission is driven.

As explained above, the element 1 comprises the recess 7 on its outer circumferential side of the driving belt V and the protruding portions 9 protruding toward the width center of the recess 7 are formed on opening ends of both of the inner walls of the columns 6. Further, the male connection 11 protruding toward the adjoining element is formed on one of the faces of the element 1 being opposed to the adjoining element 1, and the female connection 12 into which the male connection is inserted loosely is formed on the face of the element 1 opposite to the face on which the male connection 11 is formed. More specifically, one male connection 11 and one female connection 12 are respectively formed on each face of the element 1 being opposed to the adjoining element 1, at the center of width of the element 1.

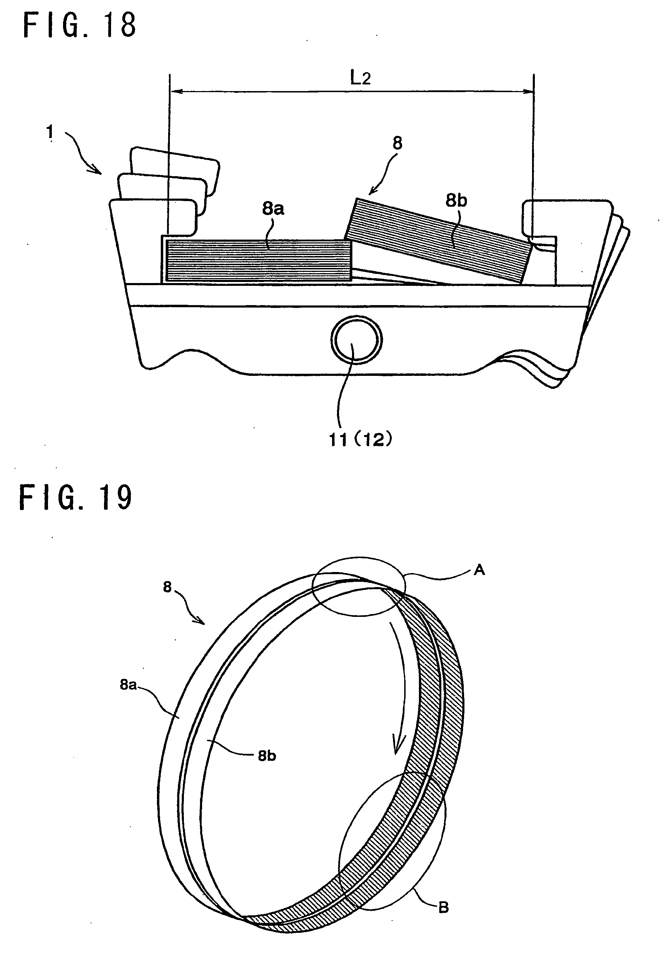

Since only one male connection 11 and one female connection 12 are formed on each face of the element 1 being opposed to the adjoining element 1 at the width center of the element 1, and those male and female connections 11 and 12 are individually joined with the adjoining male or female connection 11 or 12, the elements 1 interlinked in a circular manner can swing relatively with each other, in other words, the interlinked elements 1 can pivot relatively with each other, as shown in Fig. 18.

As mentioned above, the ring 8 comprises the first ring 8a and the second ring 8b. Therefore, as shown in Fig. 19, the rings 8a and 8b can be overlapped partially (as shown in a circle A in Fig. 19) while keeping the remaining portion of the rings 8a and 8b parallel to each other (as shown in a circle B in Fig. 19).

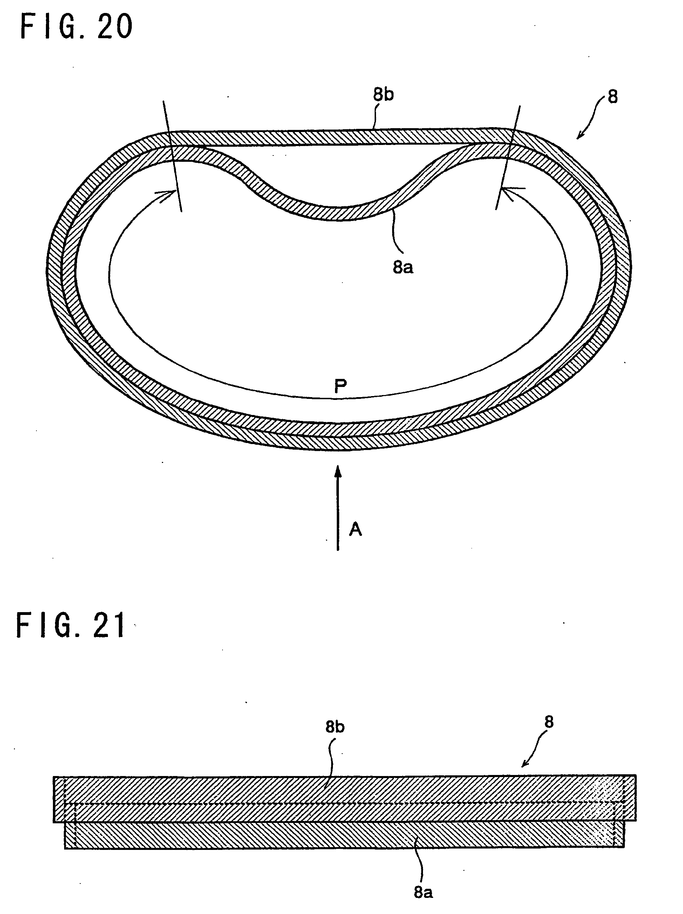

Specifically, as shown in Figs 20 and 21, the first ring 8a and the second ring 8b are overlapped in its thickness direction by buckling one of the rings (i.e., the first ring 8a in Fig. 20) and situating the buckled ring inside of other ring (i.e., the second ring 8b in Fig. 20).

As shown in Fig. 16, a width L1 of the ring 8, i.e., a total width of the first ring 8a and the second ring 8b aligned parallel to each other is wider than the aforementioned opening width W1 but narrower than the width W2. However, as indicated by L2 in Fig. 18, the total width of the ring 8 can be reduced narrower than the opening width W1 by overlapping the first ring 8a and the second ring 8b entirely or partially in its length direction.

More specifically, according to the element 1 and the ring 8 of the invention, the opening width W1 of the recess 7 is narrower than the width L1 of the ring 8, and the width W2 of the recess 7 is wider than the width L1 of the ring 8. In other words, the width L2 of the rings 8a and 8b overlapped entirely or partially in its length direction is narrower than the opening width W1 of the recess 7, and the width L1 of the rings 8a and 8b aligned parallel to each other is wider than the opening width W1 of the recess 7 but narrower than the width W2 of the recess 7.

Therefore, the ring 8 can be fitted into the recess 7 from the overlapped portion of the first ring 8a and the second ring 8b through the clearance between the end faces 9a. After the overlapped portion of the first ring 8a and the second ring 8b is thus fitted into the recess 7 from the clearance between the end faces 9a, the element 1 is moved to the portion where the first ring 8a and the second ring 8b are aligned parallel to each other so that the first ring 8a and the second ring 8b can be fitted into the clearances between the protruding portions 9 and the bottom 7a of the recess 7 shown in the Figs 16 and 18. Alternatively, it is also possible to align the overlapped rings 8a and 8b parallel to each other again in the recess 7. As a result, the first ring 8a and the second ring 8b can be held in the recess 7 while being aligned parallel to each other, and disengagement of the ring 8 from the element 1 is thereby prevented.

At an initial stage in which a number of the elements 1 holding the rings is still relatively small, high degree of freedom of the first ring 8a and the second ring 8b is still ensured so that those rings 8a and 8b can be overlapped comparatively easily. However, as the number of the element holding those rings increases, for example, at a stage in which more than half round of the first ring 8a and the second ring 8b are held by the elements 1, a movement of the rings 8a and 8b to be overlapped has to be restricted.

In order to solve the above-mentioned problem, according to the invention, the elements 1 are interlinked to the adjoining elements 1 in a circular manner being pivotable relative to each other. Therefore, the ring 8 can be twisted easily to be overlapped partially by a pivotal movement of the element 1 even at a stage in which relatively large number of elements 1 are holding the first ring 8a and the second ring 8b.

### (First Example)

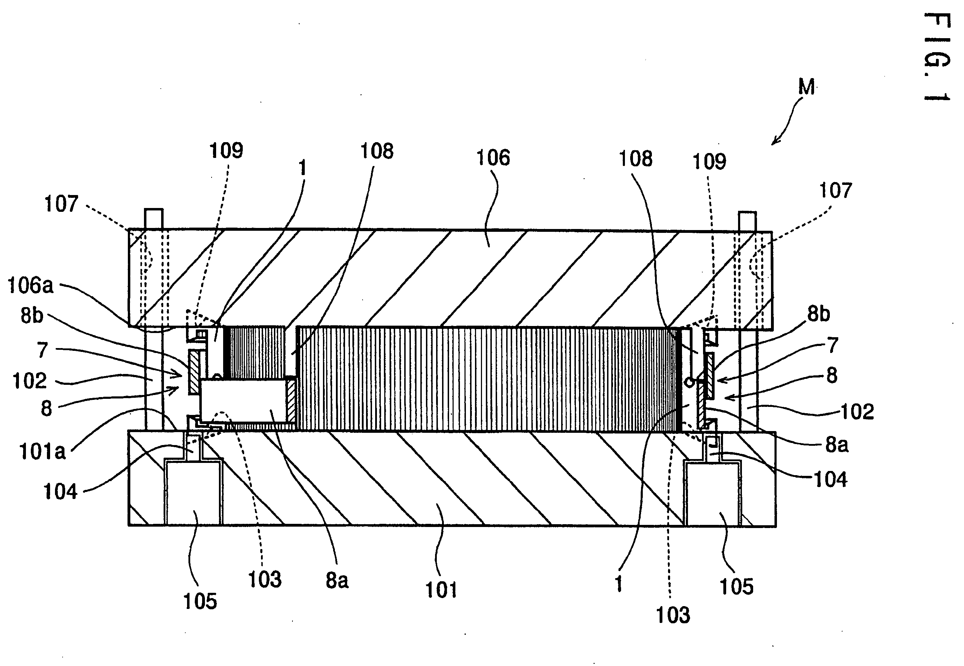

Here will be explained the first example of the assembling device M of the driving belt V with reference to the accompanying figures. As illustrated in Fig. 1, a plurality of elements (i.e., an element array) 1 is set on a base member 101, and one of the overlapped rings, i.e., the first ring 8a situated inside of the second ring 8b as shown in Figs 20 and 21 is fitted into the clearance between one of the protruding portions 9 and the bottom 7a of the recess 7. On a base face (or an upper face) 101a of the base member 101, column-shaped guide members 102 are fixedly erected substantially vertically.

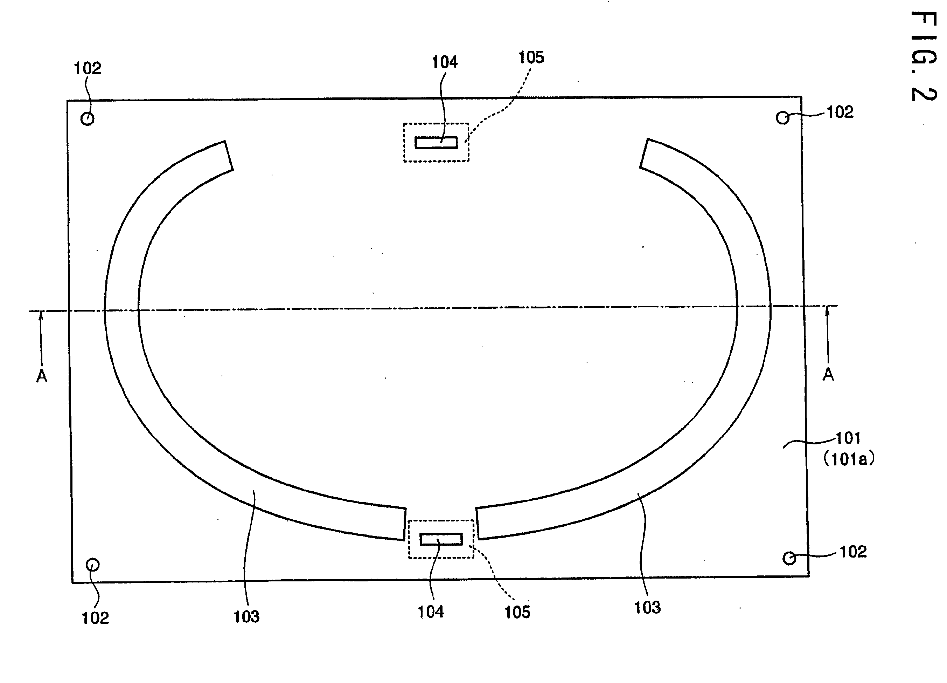

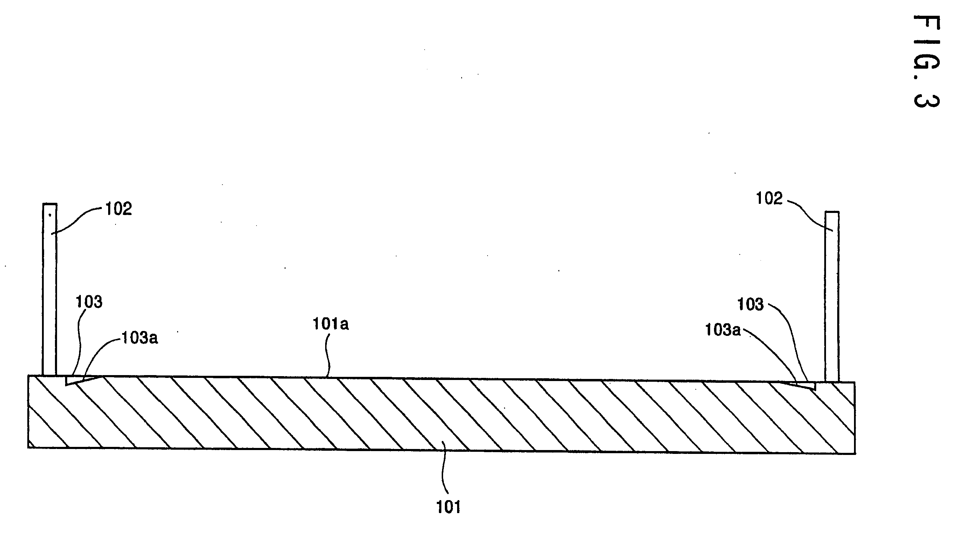

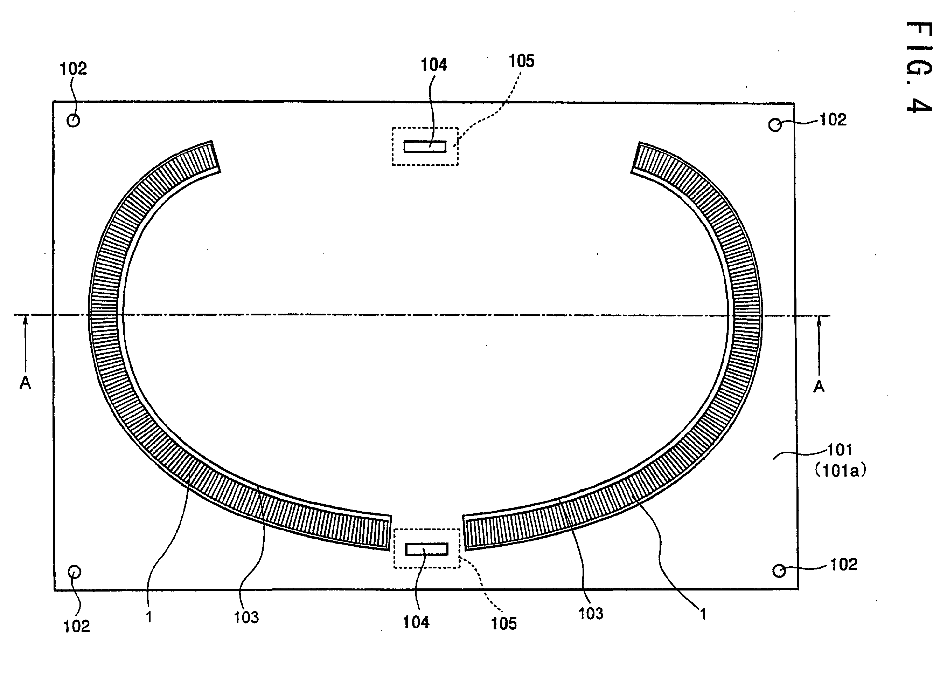

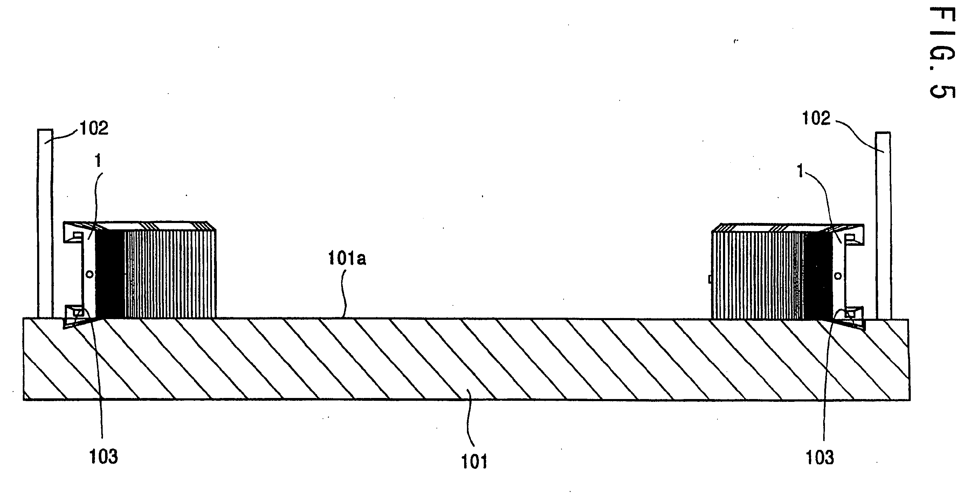

More specifically, the guide members 102 are erected on four corners of rectangular upper (or top) face of the base member 101, as shown in Fig. 2. As also shown in Fig. 2, element locking grooves 103 for holding the element array are formed on the upper face of the base member 101. As illustrated in Fig. 3, the element locking groove 103 comprises an inclined face 103a whose inclination is identical to that of the lateral faces 2 and 3 of the element 1, and a cross-section thereof is a right triangle. That is, as a result of setting the plurality of elements 1 on the locking groove 103 while directing the width direction of the elements 1 substantially perpendicular to the base face 101a, the element array 1 in which the elements 1 are juxtaposed in the thickness direction is erected substantially vertically on the base face 101a, as shown in Figs. 4 and 5.

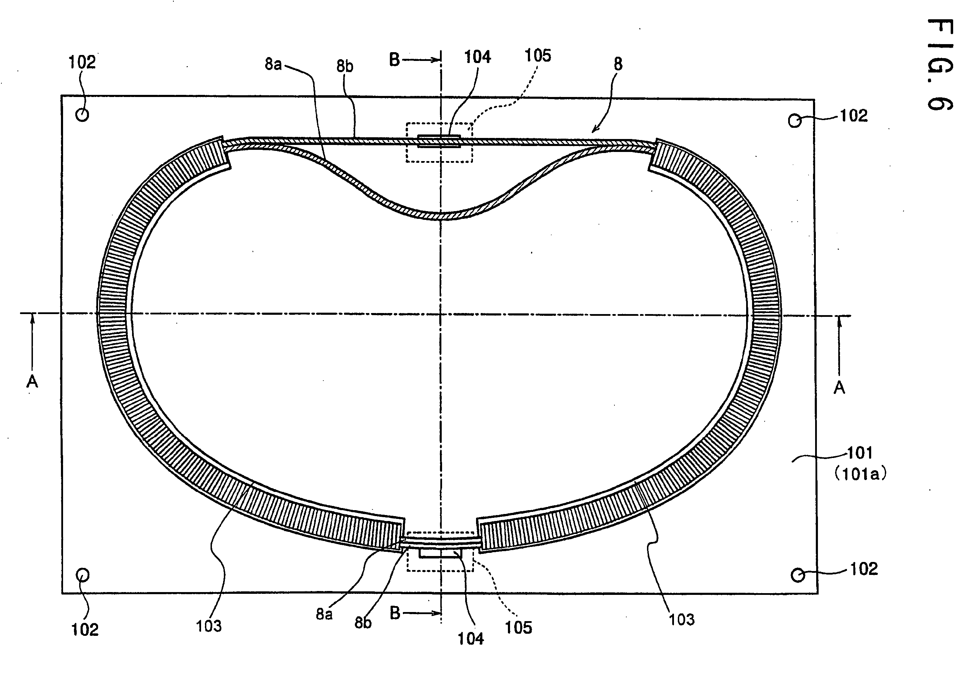

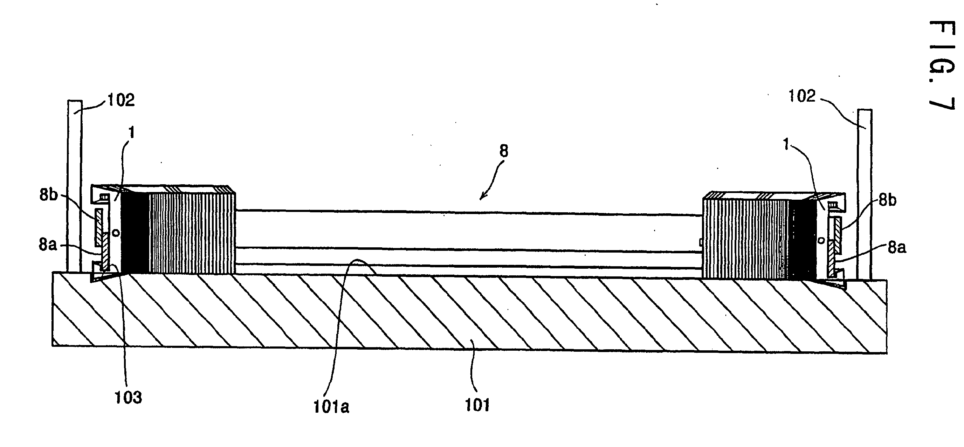

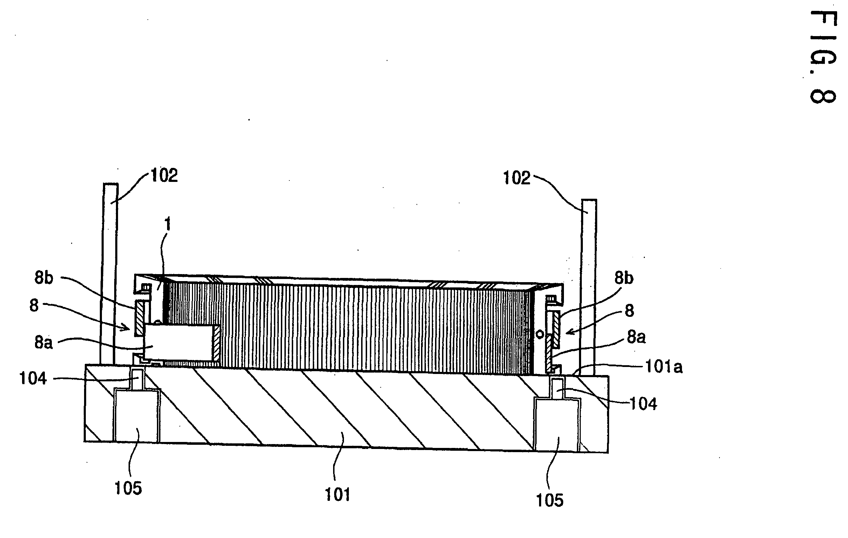

The element locking grooves 103 are formed on the portions where an outer face of the ring 8 overlapped inside of the ring 8b is contacted closely to an inner face of the ring 8b, except for regions where the overlapped ring 8a is partially buckled as represented by P in Fig. 20 and where after-mentioned ring pushing members 104 are actuated. Accordingly, the element array 1 can be erected on the base member 101 in the direction in which the width direction of the element 1 is substantially perpendicular to the base face 101a, while accommodating the overlapped ring 8a in the clearance between one of the protruding portions 9 and the base portion 7a of the recess 7, as shown in Figs. 6, 7 and 8.

For example, as shown in Fig. 2, the ring pushing member 104 for pushing an inner lateral side of the second ring 8b set on the base member 101 toward the other protruding portion 9 (i.e., toward an upper side of Fig. 1), and an actuator 105 for actuating the ring pushing member 104 in the direction vertical to the base face 101a (i.e., the vertical direction in Fig. 1) are arranged on both upper and lower width centers of the base face 101a.

In addition to above, an upper lid 106 is mounted on the base member 101 through the guide members 102. The upper lid 106 comprises guide holes 107 to which the guide members 102 are inserted to position the upper lid 106, and ring holding members 108 for restricting a movement of the first ring 8a by contacting to an inner lateral side of the first ring 8a.

The guide holes 107 are also formed on the four corners of an element holding face 106a of the upper lid 106 to insert the guide members 102 erected on the base face 101a therein. Here, the upper lid 106 also comprises element locking grooves 109 whose shape is identical to that of the locking groove 103. Specifically, the element locking grooves 109 are formed on the element holding face 106a of the upper lid 106 on the portion to be symmetrically faced with the element locking grooves 103 when the upper lid 106 is mounted on the guide members 102.

The ring holding members 108 are formed on the predetermined portions of the element holding face 106a to contact to the inner lateral side of the first ring 8a when the upper lid 106 is appropriately mounted on the base member 101 by inserting the guide members 102 into the guide holes 107.

Thus, the element array 1 is set on the element locking grooves 103, the overlapped rings 8a and 8b are accommodated in the recess 7 of the elements 1, and the upper lid 106 is positioned by inserting the guide members 102 into the guide holes 107. As a result, the element array 1 is locked by both of the locking grooves 103 and 109, and the first ring 8a whose outer lateral side is fitted into the clearance between one of the protruding portions 9 and the bottom 7a of the recess 7 is held immovably.

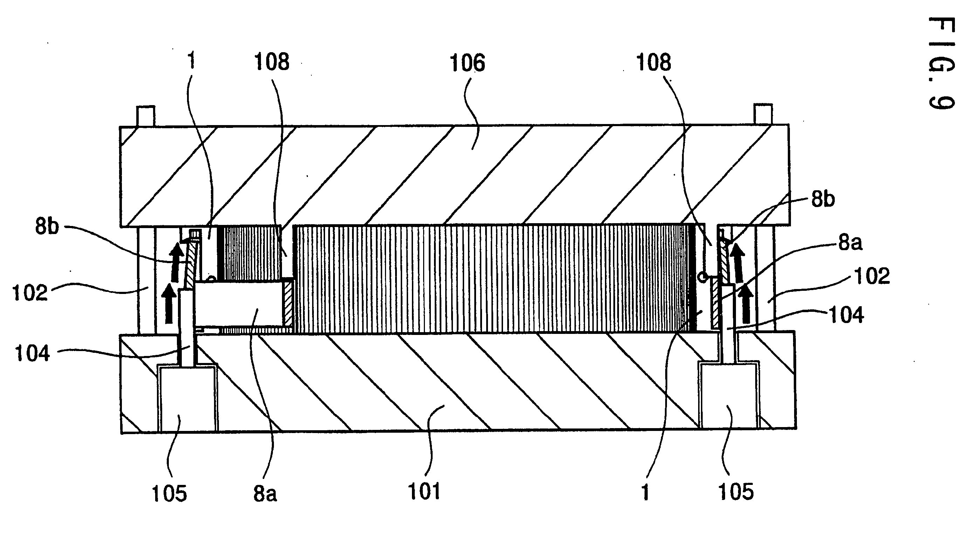

As shown in Fig. 9, after mounting the upper lid 106 on the predetermined position of the base member 101 and holding the first ring 8a immovably, the actuator 105 is actuated to move the pushing member 104 upwardly in Fig. 9 thereby pushing the inner lateral side of the second ring 8b. As a result, the second ring 8b is moved toward the other protruding portion 9.

As explained above, the upper lid 106 comprises the ring holding member 108, and the upper lid 106 is mounted on the base member 101 on which the element array 1 accommodating the overlapped rings 8a and 8b in its recess 7 is locked by the element locking groove 103. That is, the upper lid 106 and the ring holding member 108 immovably hold the overlapped first ring 8a whose outer lateral side is fitted into the clearance between one of the protruding portions 9 and the bottom 7a of the recess 7. Accordingly, the upper lid 106 and the ring holding member 108 correspond to the ring holding mechanism of the invention. As also explained above, the ring pushing member 104 is actuated by the actuator 105 to push the overlapped second ring 8b toward the other protruding portion 9. That is, the ring pushing member 104 and the actuator 105 correspond to the ring moving mechanism of the invention. Further, the element locking groove 103 formed on the base member 101, and the element locking groove 109 formed on the upper lid 106 function to hold the element array 1 in which the elements 1 are juxtaposed in its thickness direction. That is, the element locking groove 103 and the element locking groove 109 correspond to the element holding mechanism of the invention.

Thus, according to the assembling device M of the driving belt V thus far explained as the first example, the plurality of elements 1 is held in the form of element array 1 in which the elements are juxtaposed in its thickness direction. Then, the overlapped ring 8 is accommodated in the recess 7 of the element 1. Specifically, the first ring 8a overlapped inside of the second ring 8b is fitted in the inner circumferential side of one of the protruding portions 9 in the recess 7 and held immovably. Thereafter, the second ring 8b overlapped outside of the first ring 8a is pushed toward the other protruding portion 9 relative to the first ring 8a held together with the element array 1. As a result, the second ring 8b is fitted in the inner circumferential side of the other protruding portion 9 in the recess 7, and the fitting work of fitting the ring 8 into the recess 7 of the element 1 is completed. Therefore, the ring 8 can be fitted into the recess of the plurality of elements simultaneously so that the driving belt can be assembled efficiently. Consequently, the productivity of the driving belt is improved.

### (Second Example)

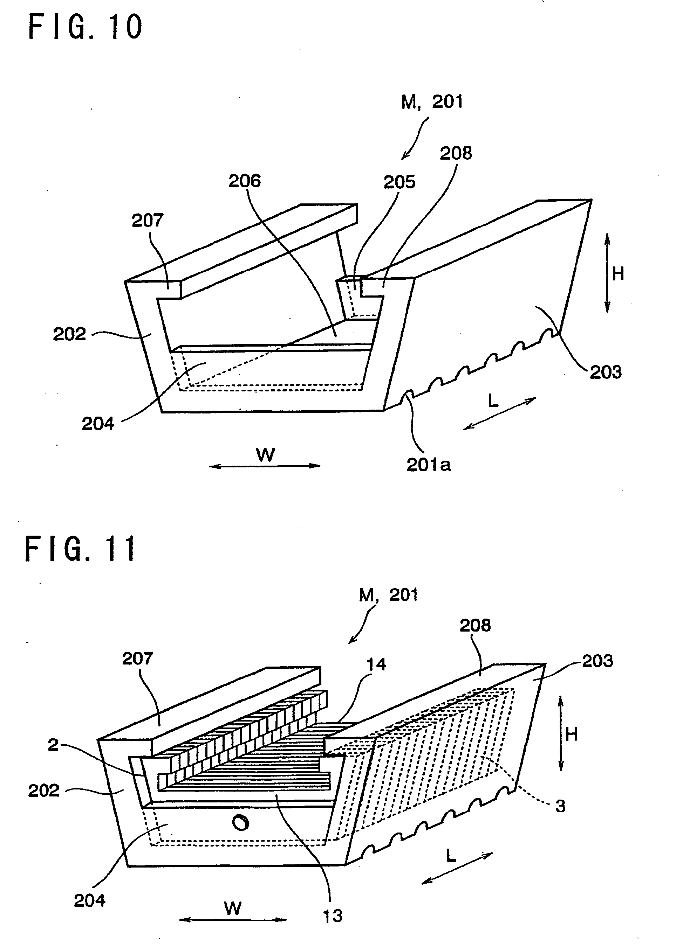

Here will be explained the second example of the assembling device M of the driving belt V with reference to the accompanying figures. The assembling device M shown in Figs 10 and 11 is formed entirely of an element holding member 201 made of flexible material such as rubber and resin, therefore, the element holding member 201 can be bent arbitrarily Specifically, the element holding member 201 is adapted to hold a plurality of elements 1 in the form of element array 1 in which the elements 1 are juxtaposed in its thickness direction and directed to open the recess 7 thereof.

Specifically, element holding member 201 comprises side walls 202 and 203 for restricting a lateral movement (in the direction represented by W in Figs. 10 and 11) of the element array 1 held therein by contacting with lateral faces 2 and 3 of the element array 1, and divider walls 204 and 205 for restricting a longitudinal movement (in the direction represented by L in Figs. 10 and 11) of the element array 1 held therein by contacting with a front or rear face of the element array 1. Both lateral ends of the divider walls 204 and 205 (i.e., both right and left ends in Figs. 10 and 11) and a bottom portions (i.e., lower portions in Figs 10 and 11) of side walls 202 and 203 are fixed integrally In addition, bottom faces (i.e., lower end faces in Figs 10 and 11) of side walls 202 and 203 and the divider walls 204 and 205 are integrally fixed with a rectangular bottom plate 206. That is, the element holding member 201 is shaped into a container-like (or package-like) shape in which an upper face (i.e., an upper side in Figs. 10 and 11) thereof is opened.

Therefore, the element holding member 201 is capable of accommodating and holding the elements 1 in the form of element array 1 in the container-like inner space thereof. The element holding member 201 further comprises latch portions 207 and 208 on leading ends (i.e., upper ends in Figs. 10 and 11) of both side walls 202 and 203. The latch portions 207 and 208 contact to upper faces of both of the protruding portions 9 of the element array 1 held in the element holding member 201, thereby restricting vertical movement (in the direction represented by H in Figs 10 and 11) of the element array 1 to prevent disengagement of the element array 1 from the element holding member 201. Both lateral and vertical movements of the element array 1 held in the element holding member 201 are thus restricted so that the element array 1 can be held in the element holding member 201 stably.

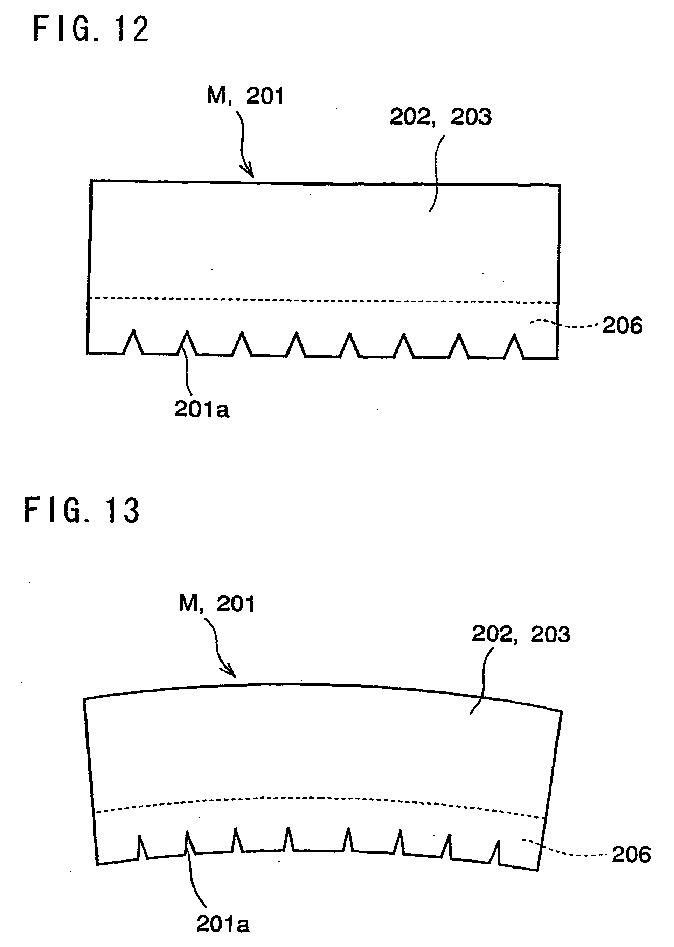

As shown in Figs 10 to 13, a plurality of slits 206a is formed on the bottom plate 206 in the width direction (as represented by W in Figs 10 and 11) of the bottom plate 206. The slits 206a are formed parallel to each other at even intervals, and a cross section thereof is V-shape or U-shape. For this reason, the element holding member 201 can be bent easily in its length direction into a circle or an ark as shown in Fig. 13. That is, the element holding member 201 can be bent in its length direction along the circumference of the ring 8 while directing the element array 1 held therein to open to the outer circumferential side.

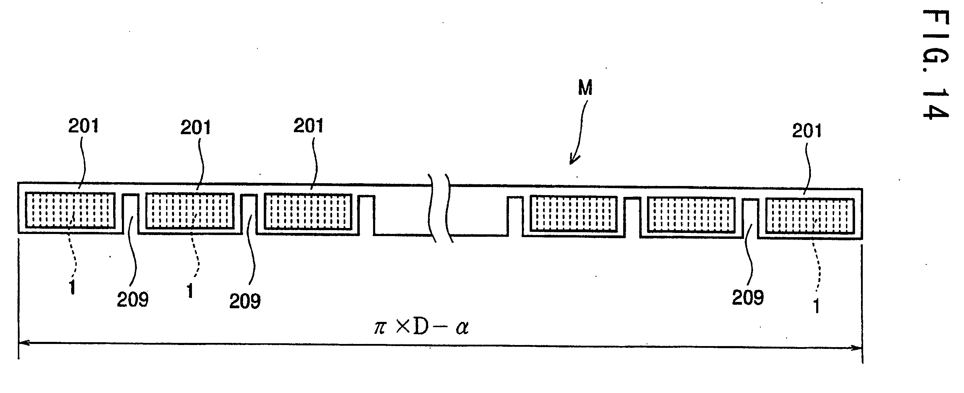

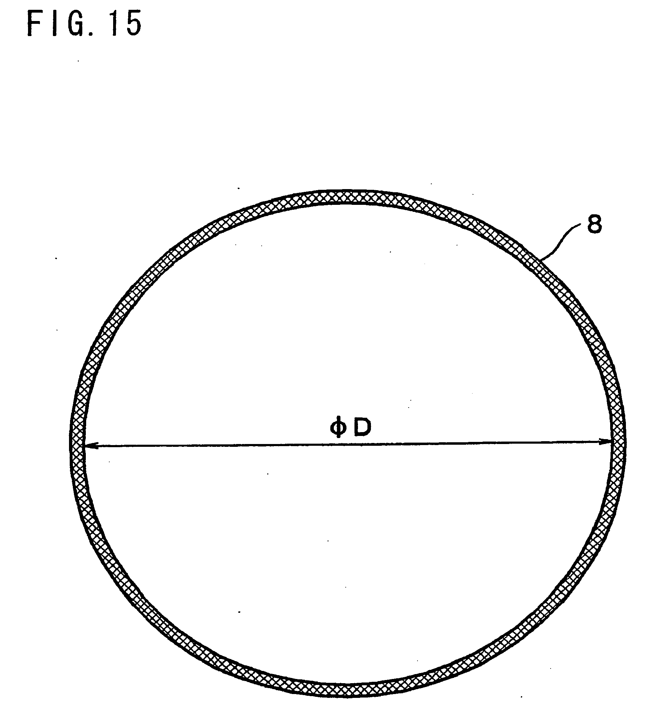

Figs. 14 and 15 illustrate a modified example of the assembling device M of the driving belt V As shown in Fig. 14, the element holding members 201 are joined with one another across a slit 209 formed in each space between the adjoining element holding members 201. In order to set the assembling device M in the inner circumferential side of the ring 8 by bending the joined element holding members 201, a total length of the joined element holding members 201 is determined to a predetermined length expressed by a formula: "π x D - α" provided that an inner diameter of the ring 8 is *φ* D as shown in Fig. 15. Therefore, the ring 8 can be fitted into the recess 7 of the elements 1 held in the element holding members 201 as many as possible simultaneously

Thus, according to the assembling device M of the second example, the plurality of element 1 is held in the element holding members 201, i.e., in the assembling device M in the form of element array 1 in which the elements 1 are juxtapose in its thickness direction while being directed to open the recess 7 thereof, and both lateral and vertical movements of the element array 1 are restricted in the element holding members 201. In addition, the assembling device M is made of flexible material so that the assembling device M is capable of winding in its length direction to hold and release the element array 1. Therefore, the ring 8 can be fitted into the recess 7 of the plurality of element array 1 simultaneously so that both lateral sides of the rings 8a and 8b can also be fitted into the clearance between the protruding portions 9 and the bottom 7a of the recess 7 of the plurality of the element 1 simultaneously, by bending the assembling device M holding the element arrays 1 therein along the circumference of the ring 8, and by fitting the ring 8 into the recess 7 of the element arrays 1 being held. As a result, the driving belt V can be assembled efficiently to improve productivity thereof.

### (First Assembling and Manufacturing Example)

Here will be explained the first example of assembling and manufacturing the driving belt V of the invention with reference to the accompanying figures. This first assembling and manufacturing example is an example of using the assembling device M of the driving belt V explained in the above-explained first example.

First of all, the first ring 8a and the second ring 8b are overlapped in its entire length. Specifically, the first ring 8a is partially buckled and situated inside of the second ring 8b as shown in Fig. 20. As a result, the first ring 8a and the second ring 8b are overlapped in its thickness direction as shown in Fig. 21.

On the other hand, as shown in Figs. 4 and 5, the elements 1 are juxtaposed in its thickness direction, and the element array 1 thus formed is set on the locking groove 103 formed on the base face 101a of the base member 101 while directing the width direction of the elements 1 substantially perpendicular to the base face 101a.

Then, the overlapped first ring 8a and the second ring 8b are inserted into the recess 7 of the element array 1 held on the base face 101a. In this situation, the outer lateral side of the first ring 8a is fitted into the clearance between one of the protruding portions 9 and the bottom 7a of the recess 7 of the elements 1.

Subsequently, the upper lid 106 is mounted on the predetermined position of the base member 101 on which the element array 1 holding the rings 8a and 8b in its recess 7 is erected. As a result of mounting the upper lid 106 on the base member 101, both lateral faces 2 and 3 of the element array 1 are locked by the element locking groove 103 of the base member 101 and the element locking groove 109 of the upper lid 106, and the lateral movement of the first ring 8a whose outer lateral side is fitted in the inner circumferential side of one of the protruding portions 9 is restricted by the ring holding member 108 of the upper lid 106.

After thus holding the element array 1 and the first ring 8a, the actuator 105 arranged in the base member 101 is actuated to move the ring pushing member 104 upwardly, i.e., in the direction to contact to the second ring 8b thereby pushing the second ring 8b toward the other protruding portion 9.

As the ring pushing member 104 is further moved upwardly, the second ring 8b overlapped outside of the first ring 8a is gradually contacted with the other protruding portion 9, and eventually fitted into the clearance between the other protruding portion 9 and the bottom 7a of the recess 7, as shown in Fig. 9. As a result, both of the outer lateral sides of the first ring 8a and the second ring 8b are fitted into the clearances between the protruding portions 9 and the bottom 7a of the recess 7 while being aligned parallel to each other, that is, an assembly of the driving belt V is completed.

According to the first assembling and manufacturing example of the driving belt V, the plurality of elements 1 is thus held in the form of the element array 1 in which the elements 1 are juxtaposed in its thickness direction, and the overlapped first and second rings 8a and 8b are accommodated in the recess 7 of the element 1. In the recess 7, the outer lateral side of the first ring 8a situated inside of the second ring 8b is fitted into the clearance between one of the protruding portions 9 and the bottom 7a of the recess 7, and the first ring 8a is held immovably Then, the second ring 8b overlapped outside of the first ring 8a is pushed toward the other protruding portion 9 thereby fitting the outer lateral side of the second ring 8b into the clearance between other protruding portions 9 and the bottom 7a of the recess 7. As a result, the ring 8 is accommodated properly in the recess 7 of the element 1 and the assembly of the driving belt V is completed. Thus, the ring 8 can be fitted into the recess 7 of the plurality of elements 1 at the same time. That is, assembly and manufacture of the driving belt V can be carried out efficiently to improve productivity thereof.

### (Second Assembling and Manufacturing Example)

Here will be explained the second example of assembling and manufacturing the driving belt V of the invention with reference to the accompanying figures. This second assembling and manufacturing example is an example of using the assembling device M of the driving belt V explained in the above-explained second example.

First of all, the first ring 8a and the second ring 8b are overlapped in its entire length. Specifically the first ring 8a is partially buckled and situated inside of the second ring 8b as shown in Fig. 20. As a result, the first ring 8a and the second ring 8b are overlapped in its thickness direction as shown in Fig. 21. Alternatively, the first ring 8a and the second ring 8b alleged parallel to each other are overlapped partially in its length direction.

On the other hand, the plurality of elements 1 is held in the container-shaped element holding member 201 the upper side (i.e., upper side in Figs. 10 and 11) thereof is opened, in the form of element array 1 in which the elements 1 are juxtaposed in its thickness direction and directed to open the recess 7 thereof. As explained above, both lateral and vertical movements of the element array 1 are restricted in the element holding member 201 so that the element array 1 can be held in the element holding member 201 stably.

As also explained above, the element holding member 201 is entirely made of flexible material such as rubber and resin so that the element holding member 201 can be bent arbitrarily to hold and release the element array 1. In addition, a plurality of slits 206a is formed parallel to each other at even intervals on the bottom plate 206 in the width direction (as represented by W in Figs 10 and 11) of the bottom plate 206 as shown in Figs 10 to 13, and a cross section of the slits 206a is V-shape or U-shape. Therefore, the element holding member 201 can be bent easily into an arc or into a circle in its length direction.

The first ring 8a and the second ring 8b are inserted into the recess 7 of the element array 1 held in the element holding member 201 from the overlapped portion. Specifically, the outer lateral side of overlapped portion of the first ring 8a is fitted into the clearance between one of the protruding portions 9 and the bottom 7a of the recess 7.

In case the first ring 8a and the second ring 8b are overlapped entirely in its length direction, a predetermined external force is applied to the second ring 8b overlapped outside of the first ring 8a to push the second ring 8b toward the other protruding portion 9. As a result, the outer lateral side of the second ring 8b is fitted into the clearance between the other protruding portion 9 and the bottom 7a of the recess 7, and the first ring 8a and the second ring 8b are aligned parallel to each other. As a result, both of the outer lateral sides of the first ring 8a and the second ring 8b are fitted into the clearances between protruding portions 9 and the bottom 7a of the recess 7 of the element array 1, and assembly of the driving belt V is completed.

Alternatively, in case the first ring 8a and the second ring 8b are overlapped partially in its length direction, the element array 1 holding the overlapped portion of the first ring 8a and the second ring 8b is moved along the length direction of the rings 8a and 8b to the portion where the rings 8a and 8b are aligned parallel to each other. As a result, both of the outer lateral sides of the first ring 8a and the second ring 8b are fitted into the clearances between protruding portions 9 and the bottom 7a of the recess 7 of the element array 1, and assembly of the driving belt V is completed.

According to the second assembling and manufacturing example of the driving belt V, the plurality of elements 1 is thus held in the element holding member 201, i.e., in the assembling device M, in the form of element array 1 in which the elements 1 are juxtapose in its thickness direction while being directed to open to the recess 7 thereof, and both lateral and vertical movements of the element array 1 are restricted in the element holding members 201. In addition, the assembling device M is made of flexible material so that the assembling device M capable of winding in its length direction to hold and release the element array 1. Therefore, the ring 8 can be fitted into the recess 7 of the plurality of element array 1 simultaneously so that both lateral sides of the rings 8a and 8b can also be fitted into the clearances between the protruding portions 9 and the bottom 7a of the recess 7 of the plurality of the element 1 simultaneously, by bending the assembling device M holding the element arrays 1 therein along the circumference of the ring 8 and fitting the ring 8 into the recess 7 of the element array 1 being held. As a result, the driving belt V can be assembled efficiently and productivity of the driving belt V is thereby improved.

Moreover, as shown in Figs. 14 and 15, the plurality of element holding members 201 can be joined with one another across a slit 209 to form the assembling device M. Therefore, the ring 8 can be fitted into the recess 7 of the elements 1 as many as possible at the same time by using the assembling device M thus structured.

### (Third Assembling and Manufacturing Example)

Here will be explained the third example of assembling and manufacturing the driving belt V of the invention. This third assembling and manufacturing example is an example of using both of the assembling devices M of the above-explained second and third example.

First of all, the ring 8 is fitted into the recess 7 of the most pieces (e.g., 80%) of the scheduled number of the elements 1 by the method of first assembling and manufacturing example using the assembling device M of the first example, or a predetermined device and method.

Then, the remaining portion of the ring 8 is fitted into the recess 7 of the remaining pieces of the elements 1 by the method of second assembling and manufacturing example using the assembling device M of the second example.

Thus, according to the third assembling and manufacturing example of the driving belt V the ring 8 can be fitted into the recess 7 of the plurality of elements 1 simultaneously and easily. Therefore, the driving belt V can be assembled efficiently in its entire length so that the productivity thereof can be improved.

Here, the present invention should not be limited to the aforementioned example. That is, although the examples of the present invention thus far describe relate to the driving belt used in a belt type continuously variable transmission, the present invention can also be applied to a driving belt to be applied to another kind of transmission mechanism composed mainly of a belt and pulleys.

## Claims

1. An assembling device of a driving belt (V), in which a plurality of elements (1) is interlinked annularly in a manner to situate a recess (7) thereof to open to an outer circumferential side,
**characterized in that**
in said driving belt (V) a first ring (8a) and a second ring (8b) are accommodated parallel to each other in the recess (7) of the element (1), and held in an inner circumferential side of protruding portions (9) formed on an opening end side of inner walls (6) of the recess (7), and protruding toward a width center of the recess to prevent detachment of the rings (8a, 8b), and
said assembling device comprises an element holding member (201) for holding the plurality of elements (1) in a form of an element array, in which the elements (1) are juxtaposed in its thickness direction and directed to open the recess (7) thereof,
wherein the element holding member (201) is made of a flexible material so that it is capable of winding into a circle or into an arc in its length direction thereby holding and releasing the element array.

2. The assembling device of a driving belt as claimed in claim 1, wherein the element holding member comprises:
side walls (202, 203) for restricting a lateral movement of the element array held therein by contacting with lateral faces of the element array; and
divider walls (204, 205) for restricting a longitudinal movement of the element array held therein by contacting with a front face or a rear face of the element array.

3. An assembling method of a driving belt (V), in which a plurality of elements (1) is interlinked annularly in a manner to situate a recess (7) thereof to open to an outer circumferential side, and in which a first ring (8a) and a second ring (8b) are accommodated parallel to each other in the recess (7) of the element (1), and held in an inner circumferential side of protruding portions (9) formed on an opening end side of inner walls (6) of the recess (7) to prevent detachment of the rings (8a, 8b), comprising:
holding the plurality of elements (1) in a form of an element array in which the elements (1) are juxtaposed to each other in its thickness direction and directed to open the recess (7) thereof;
overlapping the first and the second rings (8a, 8b) in its thickness direction, or overlapping the first and the second rings (8a, 8b) in its thickness direction partially in its length direction, by buckling one of the rings (8a, 8b) partially;
inserting the overlapped rings (8a, 8b) or an overlapped portion of the rings (8a, 8b) into the recess (7) of the element array being held;
fitting the first and second rings (8a, 8b) respectively in the inner circumferential side of the protruding portions (9) in the recess (7) by fitting the first ring (8a) overlapped inside of the second ring (8b) in an inner circumferential side of one of the protruding portion (9), and fitting the second ring (8b) overlapped outside of the first ring (8a) in an inner circumferential side of the other protruding portion (9) by moving the second ring (8b) close toward the other protruding portion (9), or
by moving the element array accommodating the overlapped rings (8a, 8b) in its recess (7) along the length direction of the rings (8a, 8b) to a portion where the first and the second rings (8a, 8b) are aligned parallel to each other; and
thereafter releasing the plurality of elements being held in the form of the element array,
wherein the element array is held in an element holding member (201) made of a flexible material so that it is capable of winding into a circle or into an arc in its length direction thereby holding and releasing the element array.

## Patentansprüche

1. Montagevorrichtung eines Antriebsriemens (V), in dem eine Vielzahl von Elementen (1) ringförmig in einer Weise miteinander verbunden ist, um eine Aussparung (7) davon so anzuordnen, dass diese zu einer Außenumfangsseite öffnet,
**dadurch gekennzeichnet, dass**
in dem Antriebsriemen (V) ein erster Ring (8a) und ein zweiter Ring (8b) parallel zueinander in der Aussparung (7) des Elements (1) aufgenommen sind und in einer Innenumfangsseite von vorstehenden Abschnitten (9), die an einer öffnenden Endseite von Innenwänden (6) der Aussparung (7) ausgebildet sind und in Richtung zu einer Breitenmitte der Aussparung vorstehen, gehalten sind, um ein Loslösen der Ringe (8a, 8b) zu verhindern,
wobei die Montagevorrichtung ein Elementhaltebauteil (201) zum Halten der Vielzahl von Elementen (1) in der Form einer Elementreihe aufweist, in der die Elemente (1) nebeneinander in deren Dickenrichtung angeordnet sind und ausgerichtet sind, um die Aussparung (7) davon zu öffnen,
wobei das Elementhaltebauteil (201) aus einem flexiblen Material gemacht ist, so dass es sich zu einem Kreis oder einen Bogen in seiner Längsrichtung winden kann, wodurch die Elementreihe gehalten und freigegeben wird.

2. Montagevorrichtung eines Antriebsriemens nach Anspruch 1, wobei das Elementhaltebauteil folgendes aufweist:
Seitenwände (202, 203) zum Beschränken einer seitlichen Bewegung der Elementreihe, die darin gehalten wird, durch Berühren von seitlichen Flächen der Elementreihe; und
Trennwände (204, 205) zum Beschränken einer Längsbewegung der Elementreihe, die darin gehalten wird, durch Berühren mit einer vorderen Fläche oder einer hinteren Fläche der Elementreihe.

3. Zusammenbauverfahren eines Antriebsriemens (V), in dem eine Vielzahl von Elementen (1) ringförmig in einer Weise miteinander verbunden ist, um eine Aussparung (7) davon so anzuordnen, dass sie zu einer Außenumfangsseite öffnet, und in dem ein erster Ring (8a) und ein zweiter Ring (8b) parallel zueinander in der Aussparung (7) des Elements (1) aufgenommen sind und in einer Innenumfangsseite von vorstehenden Abschnitten (9), die an einer öffnenden Endseite von Innenwänden (6) der Aussparung (7) ausgebildet sind, gehalten sind, um ein Loslösen der Ringe (8a, 8b) zu verhindern, wobei das Montageverfahren die folgenden Schritte aufweist:
Halten der Vielzahl von Elementen (1) in einer Form einer Elementreihe, in der die Elemente (1) nebeneinander in deren Dickenrichtung angeordnet sind und ausgerichtet sind, um die Aussparung (7) davon zu öffnen;
Überlappen des ersten und des zweiten Rings (8a, 8b) in dessen Dickenrichtung oder Überlappen des ersten und zweiten Rings (8a, 8b) in dessen Dickenrichtung und teilweise in seiner Längsrichtung, durch teilweises Ausbeulen eines der Ringe (8a, 8b);
Einsetzen der überlappten Ringe (8a, 8b) oder eines überlappten Abschnitts der Ringe (8a, 8b) in die Aussparung (7) der Elementreihe, die gehalten wird;
Einpassen jeweils des ersten Rings und des zweiten Rings (8a, 8b) in die Innenumfangsseite der vorstehenden Abschnitte (9) in der Aussparung (7) durch Einpassen des ersten Rings (8a), der an der Innenseite des zweiten Rings (8b) überlappt ist, in eine Innenumfangsseite von einem von dem vorstehenden Abschnitt (9) und Einpassen des zweiten Rings (8b), der an der Außenseite des ersten Rings (8a) überlappt ist, in eine Innenumfangsseite des anderen vorstehenden Abschnitts (9) durch Bewegen des zweiten Rings (8b) nahe zu dem anderen vorstehenden Abschnitt (9), oder durch Bewegen der Elementreihe, die die überlappten Ringe (8a, 8b) in deren Aussparung (7) aufnimmt, entlang der Längsrichtung der Ringe (8a, 8b) zu einem Abschnitt, wo der erste und der zweite Ring (8a, 8b) parallel zueinander ausgerichtet sind; und
anschließendes Freigeben der Vielzahl von Elementen, die in der Form der Elementreihe gehalten werden,
wobei die Elementreihe in einem Elementhaltebauteil (201) gehalten wird, das aus einem flexiblen Material hergestellt ist, so dass es sich zu einem Kreis oder einem Bogen in seiner Längsrichtung winden kann, wodurch die Elementreihe gehalten und freigegeben wird.

## Revendications

1. Dispositif d'assemblage d'une courroie d'entraînement (V), dans lequel une pluralité d'éléments (1) sont conjugués de manière annulaire afin de positionner leur évidement (7) pour déboucher sur un côté circonférentiel externe,
**caractérisé en ce que** :
dans ladite courroie d'entraînement (V), on loge un premier anneau (8a) et un deuxième anneau (8b) parallèles entre eux dans l'évidement (7) de l'élément (1), et maintenus dans un côté circonférentiel interne des parties en saillie (9) formées sur un côté d'extrémité d'ouverture des parois internes (6) de l'évidement (7) et faisant saillie vers un centre de largeur de l'évidement pour empêcher le détachement des anneaux (8a, 8b), et
ledit dispositif d'assemblage comprend un organe de support d'élément (201) pour maintenir la pluralité d'éléments (1) sous une forme de groupe d'éléments, dans lequel les éléments (1) sont juxtaposés dans le sens de leur épaisseur et dirigés pour ouvrir leur évidement (7),
dans lequel l'organe de support d'élément (201) est réalisé avec un matériau flexible de sorte qu'il peut s'enrouler sur un cercle ou sur un arc dans la direction de sa longueur, maintenant et libérant ainsi le groupe d'éléments.

2. Dispositif d'assemblage d'une courroie d'entraînement selon la revendication 1, dans lequel l'organe de support d'élément comprend :
des parois latérales (202, 203) pour limiter un mouvement latéral du groupe d'éléments maintenus à l'intérieur de ces dernières, par contact avec les faces latérales du groupe d'éléments ; et
des parois de séparation (204, 205) pour limiter un mouvement longitudinal du groupe d'éléments maintenus à l'intérieur de ces dernières par contact avec une face avant ou une face arrière du groupe d'éléments.

3. Procédé d'assemblage d'une courroie d'entraînement (V), dans lequel une pluralité d'éléments (1) sont conjugués de manière annulaire afin de positionner leur évidement (7) pour déboucher sur un côté circonférentiel externe, et dans lequel un premier anneau (8a) et un deuxième anneau (8b) sont logés parallèlement entre eux dans l'évidement (7) de l'élément (1), et maintenus dans un côté circonférentiel interne des parties en saillie (9) formées sur un côté d'extrémité d'ouverture des parois internes (6) de l'évidement (7) pour empêcher le détachement des anneaux (8a, 8b), comprenant les étapes consistant à :
maintenir la pluralité d'éléments (1) sous la forme d'un groupe d'éléments dans lequel les éléments (1) sont juxtaposés entre eux dans le sens de leur épaisseur et dirigés pour ouvrir leur évidement (7) ;
faire chevaucher les premier et deuxième anneaux (8a, 8b) dans le sens de leur épaisseur, ou faire chevaucher les premier et deuxième anneaux (8a, 8b) dans le sens de leur épaisseur partiellement dans la direction de leur longueur, en formant partiellement une boucle avec l'un des anneaux (8a, 8b) ;
insérer les anneaux (8a, 8b) chevauchés ou une partie chevauchée des anneaux (8a, 8b) dans l'évidement (7) du groupe d'éléments qui est maintenu ;
monter les premier et deuxième anneaux (8a, 8b) respectivement dans le côté circonférentiel interne des parties en saillie (9) dans l'évidement (7) en montant le premier anneau (8a) chevauché à l'intérieur du deuxième
anneau (8b) dans un côté circonférentiel interne de l'une des parties en saillie (9), et monter le deuxième anneau (8b) chevauché à l'extérieur du premier anneau (8a) dans un côté circonférentiel interne dans une autre partie en saillie (9) en déplaçant le deuxième anneau (8b) à proximité de l'autre partie en saillie (9), ou bien
en déplaçant le groupe d'éléments logeant les anneaux chevauchés (8a, 8b) dans leur évidement (7) le long du sens de la longueur des anneaux (8a, 8b) sur une partie où les premier et deuxième anneaux (8a, 8b) sont alignés parallèlement entre eux ; et
libérer ensuite la pluralité d'éléments qui sont maintenus sous la forme du groupe d'éléments,
dans lequel le groupe d'éléments est maintenu dans un organe de support d'élément (201) réalisé avec un matériau flexible de sorte qu'il peut s'enrouler sur un cercle ou sur un arc dans le sens de sa longueur, maintenant et libérant ainsi le groupe d'éléments.
